# EUROPEAN PATENT APPLICATION

(11) **EP 2 600 158 A1**
(43) Date of publication of application: **05.06.2013**
(21) Application number: 11812213.4
(22) Date of filing: 30.06.2011
(51) Int. Cl.: G01N 35/10, G01N 35/00

(54) **AUTOANALYZER**

(30) Priority: 27.07.2010 JP 2010167678
(71) Applicant: Hitachi High-Technologies Corporation, Tokyo 105-8717 (JP)
(72) Inventor: YAMAZAKI Isao, Hitachinaka-shi Ibaraki 312-8504 (JP)
(74) Representative: Beetz & Partner
(86) International application number: PCT/JP2011/065024
(87) International publication number: WO 2012/014620

(57) **Abstract**

Dispensing failure occurs when air-sucking or clogging is caused at the time of sucking sample or reagent by using a dispensing probe. An automatic analyzer is equipped with a dispensing mechanism (15) for dispensing the sample into a reaction container (35) from a reagent container (10) and an analysis means (61) for analyzing contents within the reaction container (35), wherein the dispensing mechanism (15) includes a pressure generation mechanism (69) for changing the pressure within a nozzle and a dispensing flow path (24) for coupling between the nozzle and the pressure generation mechanism (69) and containing pressure transmission medium therein; and further includes an oscillator (27) for applying vibration of a particular frequency to the pressure transmission medium within the flow path, a pressure sensor (26) for detecting the pressure within the flow path, and a mechanism (76) for detecting whether or not the sample is sucked normally into the nozzle based on the amplitude or the phase difference of the component of the particular frequency extracted from the output of the pressure sensor (26).

## Description

### Technical Field

The present invention relates to an automatic analyzer for automatically analyzing components of blood etc.

### Background Art

In an automatic analyzer, a biological sample such as blood or urine is dispensed into a reaction container disposed on a reaction line from a sample container, then reagent is dispensed into the reaction container disposed on the reaction line from a reagent container, and the mixture of the sample and the reagent is measured by a measuring means such as a photometer to thereby perform a qualitative analysis or a quantitative analysis.

At the time of dispensing each of the sample and the reagent, the tip end of a dispensing probe is dipped into the liquid to be dispensed. In this case, the longer the dipped length of the probe is, the larger an amount of the liquid adhered to the outer wall of the probe becomes, and hence the degree of contamination 0290-72108EP/AS becomes larger. In order to reduce the dipped length of the dispensing probe as small as possible, in general there has been employed a control method that the liquid surface of the liquid within the container is detected, then the moving-down operation of the probe is stopped when the tip end of the probe reaches a position slightly below the liquid surface, and a predetermined amount of the liquid is sucked into the probe. As a means for detecting the liquid surface of the sample, there has been employed a method of measuring an electrostatic capacity between a sample probe and the sample, for example. This method detects the liquid surface by utilizing a fact that the electrostatic capacity changes largely when the sample probe contacts with the sample.

At the time of sucking the sample by using such the sample probe, a film or a bubble (s) may be generated at the upper portion of the liquid surface of a specimen or the reagent due to a trouble caused upon dispensing operation by an operator. In that case, since the electrostatic capacity changes largely when the tip end of the dispensing probe contacts with the film or the bubble on the liquid surface, the film or the bubble may be erroneously detected as the liquid surface. Thus, the probe may not reach the liquid surface in the case where the dipped position of the probe is set to the existing position slightly below the liquid surface. Thus, in the succeeding sucking operation, since the liquid smaller than a predetermined amount or the air instead of the liquid may be sucked, an analyzing result different from an expected value may be outputted. In order to solve this problem, a patent literature 1 discloses a method that a pressure sensor is provided at a suction flow path, then a pressure within the suction flowpath after stopping the suction operation is detected, and a pressure value during the suction operation or after the suction operation is compared with a threshold value to thereby detect the clogging of suction flow path or the shortage of the suction amount.

### Prior Art Document

### Patent Literature

Patent Literature 1: JP-A-2005-17144

### Summary of the invention

### Problems to be Solved by the Invention

According to the method disclosed in the patent literature 1, an average value or a changing value of the pressure in a particular time period during the suction operation or after the suction operation is compared with the predetermined threshold value to thereby detect the shortage of the suction amount.

However, the pressure change during the suction operation and after the suction operation is large, whilst a difference between the pressure at the time of the normal sucking and the pressure at the time of the shortage of the sucking is small. Thus, it has been difficult to accurately discriminate the shortage of the sucking.

Further, the viscosity coefficients or the like of the specimen and the reagent to be sucked is not constant, and the suction amount changes depending on a measuring item. Thus, since the pressure value at the time of the normal sucking is not constant, it is difficult to discriminate the normal sucking and the shortage of the sucking under all conditions.

### Means for Solving the Problems

In order to solve the aforesaid problem, the automatic analyzer according to the present invention includes: a dispensing mechanism for dispensing sample into a reaction container from a sample container; and an analysis means for analyzing contents within the reaction container, wherein the dispensing mechanism includes a movable dispensing probe, a metering pump capable of sucking and discharging a constant amount of liquid, and a dispensing flow path for coupling between the dispensing probe and the metering pump and containing system liquid therein; and further including an oscillator for applying vibration of a particular frequency to the system liquid within the flow path, a pressure sensor for detecting a pressure within the dispensing flow path, and a mechanism for detecting whether or not the sample is sucked normally during a sucking operation based on the amplitude or the phase difference of the component of the particular frequency extracted from the output of the pressure sensor.

Preferably, a signal processing is performed by using a signal representing the phase of vibration of the oscillator and the output signal of the pressure sensor.

Preferably, each the generation of air-sucking and the clogging is detected at a time of sucking the sample.

Preferably, the dispensingprobe has, at the tip end thereof, a squeezingportionwhich inner diameter is configuredtobe smaller toward the tip end portion thereof.

Preferably, the particular frequency is substantially same as a resonance frequency at which the pressure amplitude of fluid within the dispensing flow path becomes maximum value.

Preferably, an amplitude of the particular frequency of the pressure change and phase delay of the pressure change with respect to the vibration of the oscillator are detected, and a relation between the amplitude and the phase delay is compared with a predetermined reference to thereby determine presence/non-presence of abnormality in the sucking of the sample.

Preferably, the detection of the pressure change is performed during a time period from completion of the sucking of the sample to starting of discharging of the sample.

Preferably, the pressure change is detected while the dispensing probe is moved.

Preferably, the oscillator is also used as a metering pump driven by pulses.

Preferably, the pressure sensors are provided at two or more positions of the dispensing flow path, and presence/non-presence of abnormality in the sucking of the sample is detected by comparing signals from the pressure sensors.

### Effects of the Invention

The automatic analyzer according to this invention is configured to include the pressure sensor and the oscillation mechanism in the dispensing flow path to thereby determine whether or not the sucking is performed normally based on the amplitude and the phase difference of the oscillation frequency component in the pressure change. Thus, the automatic analyzer can be provided which has a function of accurately performing this determination even when a predetermined amount of the liquid cannot be sucked due to the presence of a film or bubble (s) on the liquid surface.

### Brief Description of the Drawings

Fig. 1 is a diagram for explaining the entirety of a first embodiment.
Fig. 2 is a diagram showing the configuration of the main part of the first embodiment.
Fig. 3 is a graph showing the output waveforms of the pressure sensor in the first embodiment.
Fig. 4 is a graph showing the frequency characteristics of the first embodiment.
Fig. 5 is a graph showing the characteristics of the first embodiment.
Fig. 6 is a graph showing the characteristics under another condition in the first embodiment.
Fig. 7 is a diagram showing the configuration of the main part of a second embodiment.
Fig. 8 is a graph showing the output waveforms of the pressure sensor in the second embodiment.
Fig. 9 is a diagram showing the configuration of the main part of a third embodiment.
Fig. 10 is a diagram for explaining the entirety of a fourth embodiment.

### Modes for Carrying Out the Invention

Hereinafter, embodiments according to the present invention will be explained with reference to drawings.

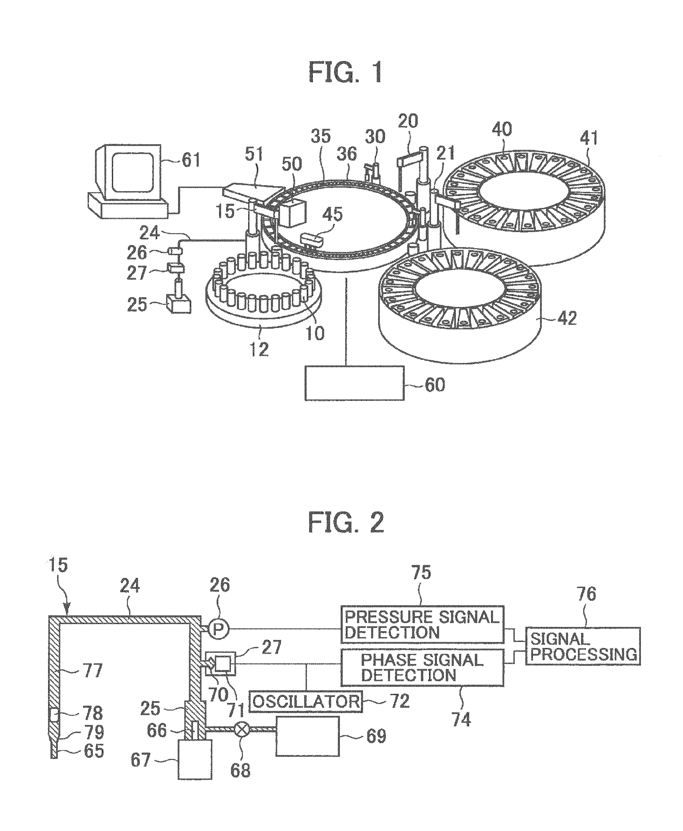

Figs. 1 and 2 show the first embodiment of the automatic analyzer to which the present invention can be applied.

The automatic analyzer is configured by a sample disc 12 capable of mounting a plurality of sample containers 10 for containing samples therein, a first reagent disc 41 and a second reagent disc 42 each capable of mounting a plurality of reagent containers 40 for containing reagent therein, a reaction disc 36 disposing a plurality of reaction containers 35 on the circumferential surface thereof, a sample probe 15 for dispensing the reagent sucked from the sample containers 10 into the reaction containers 35, a first reagent probe 20 for dispensing the reagent sucked from the reagent containers 40 of the first reagent disc 41 into the reaction containers 35, a second reagent probe 21 for dispensing the reagent sucked from the reagent containers 40 of the second reagent disc 42 into the reaction containers 35, a stirring device 30 for stirring the liquid within the reaction containers 35, a container cleaning mechanism 45 for cleaning the reaction containers 35, a light source 50 disposed in the vicinity of the outer periphery of the reaction disc 36, a spectroscopic detector 51, a computer 61 coupled to the spectroscopic detector 51, and a controller 60 which controls the entire operation of the analyzer and exchanges data with the outside. The sample probe 15 is coupled to a metering pump 25 via a dispensing flow path 24. A pressure sensor 26 and an oscillator 27 are provided on the way of the dispensing flow path 24.

As shown in detail in Fig. 2, a squeezing portion 65 having a small sectional area is provided at the tip end of the sample probe 15. The oscillator 27 is configured by a chamber 70 and a piezoelectric element 71. The metering pump 25 is provided with a plunger 66 which is driven by a driving mechanism 67. The meteringpump 25 is coupled to a pump 69 via a valve 68. The piezoelectric element 71 is coupled to an oscillator 72 and the oscillator 72 is also coupled to a phase signal detector 74. The pressure sensor 26 is coupled to a pressure signal detector 75, and each of the phase signal detector 74 and the pressure signal detector 75 is coupled to a signal processor 76. The sample probe 15 has a not-shown moving mechanism, whereby the sample probe is moved upward and downward directions and rotated by the moving mechanism so as to move between the sample containers 10 and the reaction containers 35.

The automatic analyzer according to this embodiment operates in the following manner. The samples to be analyzed such as blood are respectively contained within the sample containers 10 and the sample containers are set on the sample disc 12. The kinds of analysis necessary for the respective samples are inputted into the controller 60. The sample sucked by the sample probe 15 is dispensed by a predetermined amount into the reaction container 35 disposed on the reaction disc 36, then a predetermined amount of reagent is dispensed into the reaction container by the reagent probe 20 or 21 from the reagent container 40 disposed on the reagent disc 41 or 42, and the mixture within the reaction container is stirred by the stirring device 30. The reaction disc 36 repeats the rotating and stopping operations periodically, and the reaction container 35 is subjected to light measurement by the spectroscopic detector 51 at timing where the reaction container passes in front of the light source 50. The light measurement is repeatedly performed during a reaction time of 10 minutes, and thereafter the container cleaning mechanism 45 exhausts the reaction liquid within the reaction container 35 and washes the reaction container. During the aforesaid operations, operations using other samples and reagents are executed in parallel as to the other reaction containers 35. The computer 61 calculates data obtained by the light measurement of the spectroscopic detector 51 and obtains and displays density of the components according to the kind of analysis.

The operation of the sample probe 15 will be explained in detail with reference to Fig. 2. Before sucking the sample, firstly, the valve 68 is opened/closed to fill the flow path of the sample probe 15 with system liquid 77 supplied from the pump 69. Then, in a state that the tip end of the sample probe 15 locates within the atmosphere, the driving mechanism 67 moves down the plunger 66 to suck separation air 78. Then, the sample probe 15 is moved down into the sample container 10, and the plunger 66 is moved down by a predetermined length in a state that the tip end of the probe is dipped into the sample to thereby suck the sample within the probe. In this case, suction liquid 79 is the sample. After the sucking, the probe is moved up and stopped. Then, the oscillator 72 supplies a sinusoidal signal to the piezoelectric element 71 to thereby apply sinusoidal vibration to the system liquid 77 from the chamber 70. The pressure sensor 26 detects the change of the pressure during this period. The output of the sensor is amplified by the pressure signal detector 75 and sent to the signal processor 76. Simultaneously, a sinusoidal phase signal from the oscillator 72 is detected by the phase signal detector 74 and the detected phase signal is sent to the signal processor 76. The signal processor 76 determines the presence/non-presence of the abnormality of the suction based on the pressure signal and the phase signal. When it is determined that there is no abnormality, a signal is applied to the controller 60 to thereby continue the operation. That is, the sample probe 15 is moved above the reaction container 35 and discharges the sample therein to thereby continue the analysis. After discharging the sample, the inside and outside of the sample probe 15 is washed by opening/closing the valve 68 and is prepared for the next analysis. When it is determined that there is abnormality in the sucking, this analysis is stopped. Then, an alarm is displayed, and then the sample probe 15 is washed and performs a restoring operation. The restoring operation is selected from dispensing again after removing the cause of abnormality, shifting to the detection of another sample, and stopping the analyzer.

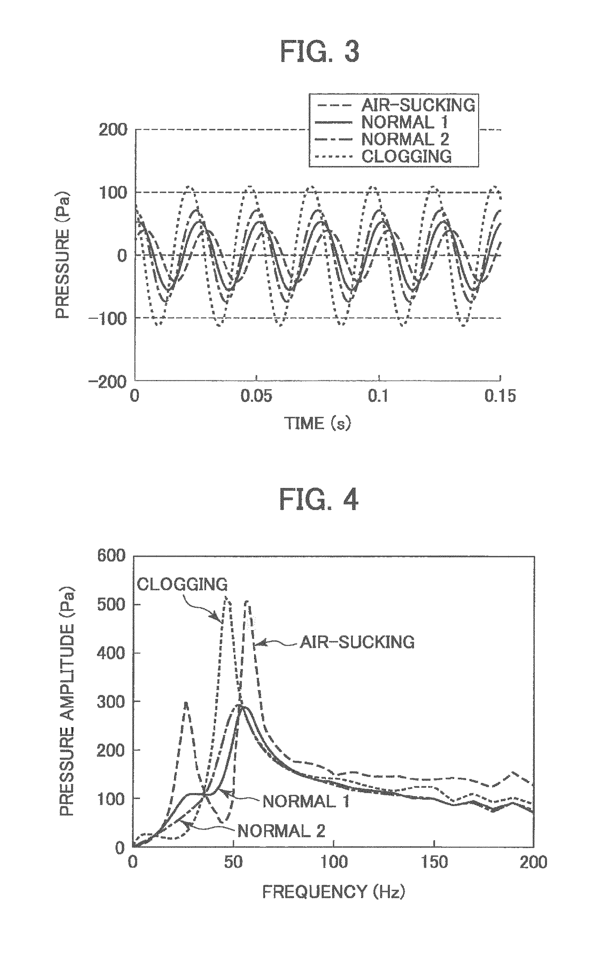

Fig. 3 shows an example of the pressure signals according to this invention, in which an abscissa represents the time and an ordinate represents the pressure. This figure shows the examples of pressure signals in the case of entering four kinds of fluids having different viscosity into the squeezing portion 65, as the condition. That is, air-sucking corresponds to a case that the air is mixed in the squeezing portion 65, normal 1 corresponds to a case that liquid having a viscosity substantially same as the lower limit of a conceivable viscosity range of normal samples is filled, normal 2 corresponds to a case that liquid having a viscosity substantially same as the conceivable average viscosity of normal samples is filled, and clogging corresponds to a case that liquid having an abnormal high viscosity is filled. As clear from the graph, since the amplitude and phase of the pressure change depending on the viscosity, it is possible to discriminate whether or not the suction is performed normally or the abnormality such as the air-sucking or clogging occurs, by discriminating the amplitude or phase difference.

Fig. 4 is a graph showing the pressure amplitude characteristics with respect to the excitation frequency in the configuration of this embodiment, in which an abscissa represents the frequency and an ordinate represents the pressure amplitude. As clear from this graph, at the frequency range around 50Hz, a resonance frequency having the maximum amplitude appears and the difference of amplitude depending on the viscosity is large. In the frequency range higher than the resonance frequency, the difference of amplitude is small. Thus, it is preferable to set the excitation frequency around the resonance frequency.

In this embodiment, the sinusoidal vibration is forcedly applied to the system liquid 77 within the dispensing flowing path system to thereby detect the deviation of the amplitude and phase of an alternative component of the pressure change. Thus, the air-sucking state that the air is mixed in the squeezing portion 65 at the tip end of the sample probe 15 can be detected. As a result, since it is possible to avoid the shortage of the dispensing amount caused by discharging the sample into the reaction container 35 in the air-sucking state, it is possible to provide the automatic analyzer which can analyze the sample with high accuracy by using the correct sample amount.

Further, this embodiment can detect a state that the liquid having abnormal high viscosity or foreign material is mixed in the squeezing portion 65 at the tip portion of the sample probe 15. Thus, since it is possible to avoid the shortage of the dispensing amount caused by discharging the sample into the reaction container 35 in the clogging state, the automatic analyzer can be provided which can analyze the sample with high accuracy by using the correct amount.

Further, in this embodiment, since the air-sucking state and the clogging state are detected by using the alternative component of the excitation frequency using the phase signal of the oscillator 72, the detection is hardly influenced by noise caused by the mechanical operation etc. and applied on the pressure change. Thus since the air-sucking state and the clogging state can be detected accurately, the automatic analyzer capable of performing accurate analysis can be provided.

Further, since this embodiment does not detect the absolute value of the pressure change but detects the alternative component thereof, the detection is not influenced even if there are differences among the average values of the pressure measurement values due to the differences in the drifts of the pressure sensors and the liquid levels. Thus, since the air-sucking state and the clogging state can be detected accurately, the automatic analyzer can be provided which can analyze the samples with high accuracy by using the correct amounts.

Further, since this embodiment performs the excitation by using the frequency around the resonance frequency having the large pressure amplitude, the excitation amplitude may be small and hence the dispensing amount cannot be influenced. Thus, the automatic analyzer can be provided which can dispense with high accuracy and analyze the sample with high accuracy.

Further, this embodiment can detect the air-sucking state and the clogging state separately based on the amplitude difference of the alternative component of the pressure change. Thus, since it is possible to perform the restoration effectively by selecting one of coping processes depending on the kind of abnormality, the automatic analyzer having a high processing ability can be provided.

Further, since this embodiment can perform the detection by causing the pressure change due to the excitation of the oscillator 27, the detection can be performed at a timing avoiding the suction operation of the sample, the moving of the sample probe 15, and so on. Thus, the air-sucking state and the clogging state can be detected accurately without being influenced by noise of the pressure signal due to the mechanical operation.

Further, it is possible to perform the detection operation during the movement of the sample probe 15. In this case, since it is not necessary to take time off for the detection, the automatic analyzer having high analyzing ability per unit time can be provided.

Further, in the case of this embodiment, since the squeezing portion 65 having the small inner diameter is provided at the tip end of the sample probe 15, a ratio of the pressure loss of the tip end portion with respect to the pressure loss of the entire flow path is high. Thus, it is possible to detect accurately as to whether or not the tip end of the probe is filled by the sample.

Further, in the case of this embodiment, since the capacity of the squeezing portion 65 is small, the inside of the squeezing portion 65 is filled with the suction liquid 79 even when the suction amount is a minimum set value. Thus, the suction state can be detected with the same condition irrespective to the setting amount of the suction.

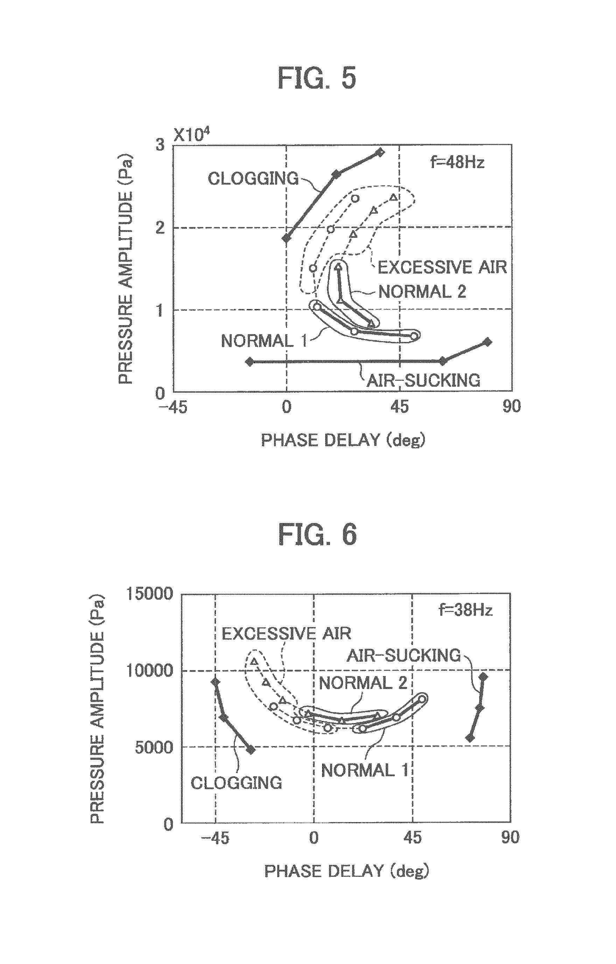

Fig. 5 is a graph in which the pressure amplitudes and the phase delay amounts are plotted, in the case where the excitation frequency is set to 48 Hz substantially same as the resonance frequency of the fluid. In the graph, an amount of the separation air 78 as well as the viscosity of the suction liquid 79 is changed. The pressure amplitude changes when an amount of the separation air 78 changes even when the viscosity of the suction liquid 79 is constant. When a bubble(s) is mixed at the time of sucking the sample, although it becomes the same state as an excessive air state where an amount of the separation air 78 is large, the pressure amplitude in this case becomes large and hence this state becomes similar to the clogging state. It is difficult to discriminate among the normal state, the excessive air state and the clogging state by merely comparing the pressure amplitudes. However, these states can be correctly discriminated by simultaneously calculating the phase delay amounts and identifying the respective areas on the map. A data table prepared in advance is used as the standard for determining as to which area on the map is the normal sucking. The data table may be determined based on the calculation using fluid simulation etc. or may be obtained based on a simulated operation.

In this case, the bubble mixed sucking, which is not complete sucking, can be detected, so that it is possible to avoid the inaccurate analysis due to the shortage of the dispensing amount.

Further, in the case of this embodiment, since the data table is prepared in advance, the data table can be corrected even when the characteristics changes due to the change of the shape of the flow path, the change of the material value of the system liquid 77 caused by the temperature change and so on. Thus, the suction state can always be detected with high accuracy.

Fig. 6 is a graph in which the pressure amplitudes and the phase delay amounts are plotted in the case where the excitation frequency is set to 38 Hz lower than the resonance frequency of the fluid. In the case of this system, although the resonance frequency exists around 30Hz other than that around 50Hz, the frequency shown in this graph locates between these two resonances frequencies.
As seen from the graph, unlike the case shown in Fig. 5, the changing amount of the amplitude is small but the changing amount of the phase delay is large, depending on the condition. In the case of exciting with this frequency, also each of the normal, air-sucking, clogging and excessive air states can be discriminated by identifying the corresponding one of the areas on the amplitude-phase delay map.

Further, in this case, in particular since the degree of the changing amount of the phase delay is large as compared with the degree of the changing amount of the amplitude, the embodiment is hardly influenced by the noise and the drift of the sensor. Thus, it is possible to detect the shortage of the dispensing amount accurately.

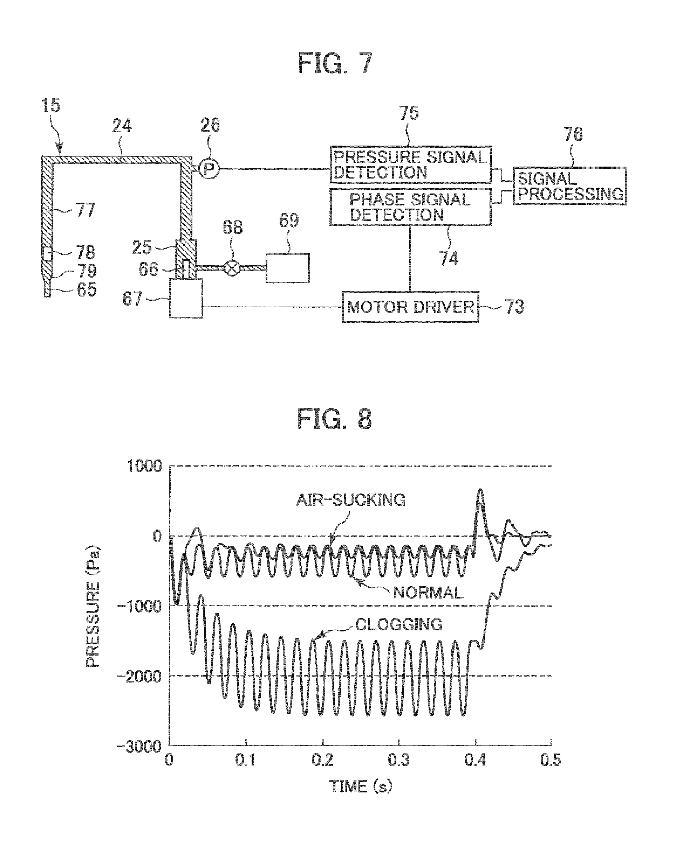

Fig. 7 shows the configuration of the main part of another embodiment of this invention. This embodiment differs from the first embodiment in that, instead of providing the oscillator 27, a motor driver 73 for driving the driving mechanism 67 is coupled to the phase signal detector 74. The driving mechanism 67 includes a pulse motor which is driven by a pulse signal from the motor driver 73.

In this embodiment, at the time of sucking the sample, the motor driver 73 generates a pulse signal having a frequency around the resonance frequency of the fluid and drives the driving mechanism 67. As a result, the plunger 66 moves down while vibrating at the driving frequency. Fig. 8 shows an example of the pressure change in this case. As clear from a graph shown in Fig. 8, the amplitude and phase of the driving frequency component differ between the air-sucking state, normal state and clogging state. It is discriminated whether or not the sucking operation is performed normally by utilizing the difference.

In the case of this embodiment, since the sucking state can be detected with high accuracy without adding the oscillator 27, the automatic analyzer can be provided which is low in cost and can analyze with high accuracy.

Further, in this embodiment, since the state can be detected at the time of sucking the sample, it is not necessary to spare time for the detection after sucking. Thus, the automatic analyzer can be provided which has high processing ability and is high in accuracy

Further, in this embodiment, since only the driving frequency component is extracted and processed by using the phase signal of the motor driver 73, it is possible to remove the influence of the noise contained in the pressure waveform due to shock or vibration etc. at the time of starting the suction. Thus, the air-sucking state and the clogging state can be detected accurately.

The configuration of this embodiment may be arranged in a manner that, by employing the driving mechanism 67 having a small resolution, the plunger 66 is moved down at a high speed by using the high frequency at the time of sucking the sample, and thereafter the plunger 66 is slightly moved down by using the low frequency around the resonance frequency of the fluid to thereby detect the air-sucking or the clogging during this operation.

In this case, since the suction of the sample is performed at a high speed, the time required for the sucking can be made short. Further, the driving mechanism can be driven at the frequency higher than the specific frequency of the driving mechanism 67. Thus, it is possible to avoid the dispensing operation with poor accuracy or the generation of noise due to the vibration without generating large vibration.

Further, in this case, the resolution of the driving mechanism 67 is small and the number of suction pulses necessary for the detection is several. Thus, since an amount of the additional suction is quite small, the dispending amount is scarcely influenced.

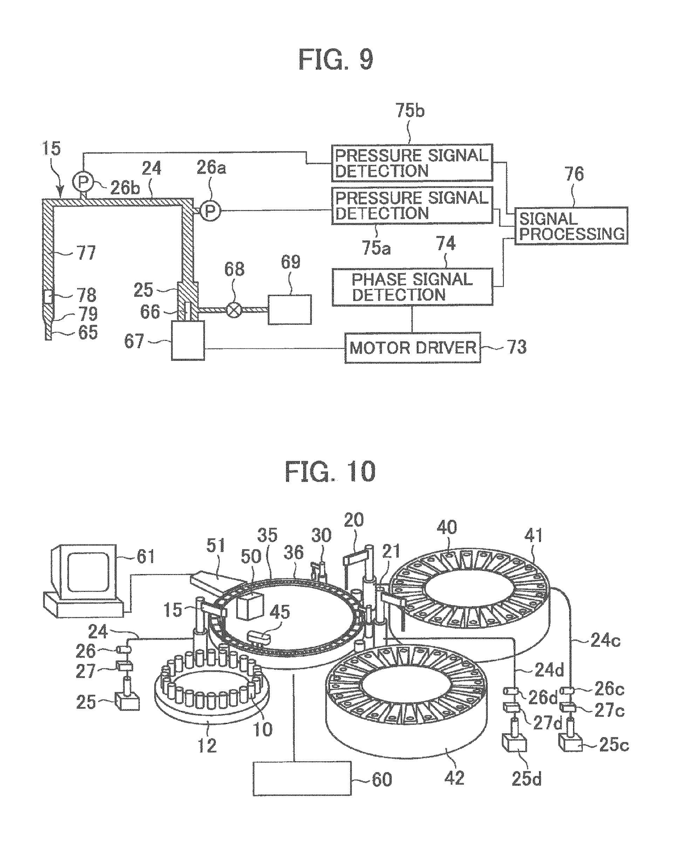

Fig. 9 is a diagram showing the main part of still another embodiment of this invention. This embodiment differs from Fig. 7 in that two pressure sensors 26a, 26b are disposed on the way of the dispensing flow path and that these sensors are coupled to the signal processor 76 via pressure signal detectors 75a, 75b, respectively. In this embodiment, the driving mechanism 67 is driven by a frequency around the resonance frequency of the fluid, then amplitudes of the excitation frequency components of the pressure change detected by the pressure sensors 26a, 26b are extracted and a ratio of them is calculated. The amplitude ratio is compared with a reference range set in advance. Then, it is determined that the sucking is the normal sucking when the amplitude ratio is within the reference range, whilst it is determined that the sucking is the abnormal sucking such as the air-sucking or the clogging when the amplitude ratio is out of the reference range.

In the case of this embodiment, since the determination is made based on the amplitude ratio using the two pressure sensors, the influence due to the temperature drift of the pressure sensors and the liquidity change of the system liquid 77 etc. can be cancelled. Thus, the air-sucking and the clogging can be detected correctly irrespective of the change of the environment.

Further, in this embodiment, in place of the two-dimensional map based on the amplitudes and the phase delay, the one-dimensional quantity of the amplitude ratio is employed as the reference. Thus, advantageously, the reference can be determined simply in a short time.

Further, in this embodiment, since the signals of the two pressure sensors are used, noise can be easily cancelled even when the measurement is performed under a condition such as during the movement of the sample probe 15 where noise is likely entered into the pressure signals from the outside. Thus, since the operation can be executed simultaneously with the operation of another mechanism, the automatic analyzer having high processing ability can be provided.

Fig. 10 is a perspective view of a yet another embodiment of this invention. This embodiment differs from the first embodiment in that pressure sensors 26c, 26d, oscillators 27c, 27d, and metering pumps 25c, 25d are also coupled to dispensing flow paths 24c, 24d that are coupled to the reagent probes 20, 21, respectively. In this embodiment, the abnormality such as the air-sucking or clogging relating to the dispensing of the reagent can be discriminated based on the procedure similar to that performed as to the dispensing of the sample in the first embodiment. In this case, since the resonance frequency changes depending on the configuration of the system, the excitation frequency is changed into a suitable frequency.

In this embodiment, since the abnormality such as the air-sucking or clogging relating to the dispensing of the reagent can also be detected, the shortage of the dispensing amount of the reagent into the reaction container can be avoided. Thus, the automatic analyzer capable of analyzing the sample with high accuracy can be provided.

Further, as the usage of the configuration of this embodiment, it is possible to measure an amount of the reagent contained within the reagent container 40. In this case, the liquid level within each of the reagent containers 40 is measured not at the time of dispensing the reagent but at the time of mounting each of the reagent containers 40 on the analyzer or starting the daily usage of the analyzer, for example. In this case, the reagent is sucked at a quite low speed and the pressure change is detected while moving the reagent probe 20 or 21 down with respect to the reagent container 40, to thereby detect the height where the reagent probe reaches the liquid level. Alternatively, a quite small amount of the reagent is sucked and the amplitude and phase of the particular frequency component are detected after moving down the reagent probe to the height where the liquid level is supposed to exist, to thereby determine whether or not a predetermined amount of the reagent is contained.

According to this method, since an amount of the liquid within the reagent container can be detected without employing the electrical method such as the electrostatic capacitance method, an amount of the liquid within the reagent container can be detected correctly while avoiding the erroneous detection caused by bubbles etc.

Further, according to this method, since the presence or absence of the reagent is detected based on the pressure change during the sucking of a quite small amount of the liquid, an amount of the reagent to be sucked required for the detection is quite small. Thus, the consumption amount of the reagent can be made small.

In this case, particular frequency components of the change due to the low speed driving of the metering pumps 25c, 25d may be used without providing the oscillators 27c, 27d, in particular. As a result, the cost can be made low since the oscillators are not necessary.

### Description of Reference Numbers

| | |
|---|---|
| 10 | sample container |
| 12 | sample disc |
| 15 | sample probe |
| 20 | first reagent probe |
| 21 | second reagent probe |
| 24 | dispensing flow path |
| 25 | metering pump |
| 26 | pressure sensor |
| 27 | oscillator |
| 30 | stirring device |
| 35 | reaction container |
| 36 | reaction disc |
| 40 | reagent container |
| 41 | first reagent disc |
| 42 | second reagent disc |
| 45 | container cleaning mechanism |
| 50 | light source |
| 51 | spectroscopic detector |
| 60 | controller |
| 61 | computer |
| 65 | squeezing portion |
| 66 | plunger |
| 67 | driving mechanism |
| 68 | valve |
| 69 | pump |
| 70 | chamber |
| 71 | piezoelectric element |
| 72 | oscillator |
| 73 | motor driver |
| 74 | phase signal detector |
| 75 | pressure signal detector |
| 76 | signal processor |
| 77 | system liquid |
| 78 | separation air |
| 79 | suction liquid |

## Claims

1. An automatic analyzer comprising:
a dispensing mechanism for dispensing sample into a reaction container from a sample container; and
an analysis unit for analyzing contents within the reaction container, wherein
the dispensing mechanism includes a pressure generation mechanism for changing a pressure within a nozzle, and a dispensing flow path for coupling between the nozzle and the pressure generation mechanism and containing pressure transmission medium therein, and further comprising:
an oscillator for applying vibration of a particular frequency to the pressure transmission medium within the flow path, a pressure sensor for detecting a pressure within the flow path, and
a mechanism for detecting whether or not the sample is sucked normally into the nozzle based on amplitude or a phase difference of a component of the particular frequency extracted from an output of the pressure sensor.

2. The automatic analyzer according to claim 1, wherein the dispensing mechanism performs a signal processing by using a signal representing a phase of vibration of the oscillator and an output signal of the pressure sensor.

3. The automatic analyzer according to claim 1, wherein each of generation of air-sucking and clogging is detected at a time of sucking the sample.

4. The automatic analyzer according to claims 1 to 3, wherein the dispensing probe has, at a tip end thereof, a squeezing portion which inner diameter is configured to be smaller toward a tip end portion thereof.

5. The automatic analyzer according to claims 1 to 4, wherein the particular frequency is substantially same as a resonance frequency at which a pressure amplitude of fluid within the dispensing flow path becomes maximum value.

6. The automatic analyzer according to claims 1 to 5, wherein an amplitude of the particular frequency of pressure change and phase delay of the pressure change with respect to the vibration of the oscillator are detected, and a relation between the amplitude and the phase delay is compared with a predetermined reference to thereby determine presence/non-presence of abnormality in the sucking of the sample.

7. The automatic analyzer according to claim 6, wherein the detection of the pressure change is performed during a time period from completion of the sucking of the sample to starting of discharging of the sample.

8. The automatic analyzer according to claims 1 to 7, wherein pressure change is detected while a dispensing probe is moved.

9. The automatic analyzer according to claims 1 to 8, wherein the oscillator is also used as a metering pump driven by pulses.

10. The automatic analyzer according to claims 1 to 9, wherein the pressure sensors are provided at two or more positions of the dispensing flow path, and presence or absence of abnormality in the sucking of the sample is detected by comparing signals from the pressure sensors.
